# FASCICULE DE BREVET EUROPEEN

(11) **EP 1 500 824 B1**
(45) Date de publication et mention de la délivrance du brevet: **05.09.2012**
(21) Numéro de dépôt: 04103433.1
(22) Date de dépôt: 19.07.2004
(51) Int. Cl.: F04D 29/56, F01D 17/16, F02C 9/18

(54) **Compresseur haute pression à cycle hybride et turbomachine comprenant un tel compresseur**
Hochdruckverdichter für Hybridkreislauf und Turbomaschine mit einem solchen Verdichter
High pressure compressor for a hybrid cycle and turbomachine having the same

(30) Priorité: 21.07.2003 FR 0350355
(43) Date de publication de la demande: 26.01.2005
(73) Titulaire: SNECMA, 75015 Paris (FR)
(72) Inventeur: LOUDET, Claude, Joseph, Auguste, 77950, MAINCY (FR)
(74) Mandataire: Poulin, Gérard

(56) Documents cités:
- US-A- 4 874 287
- US-A- 5 155 993
- US-A- 5 911 679
- US-B1- 6 438 941

## Description

### DOMAINE TECHNIQUE

La présente invention se rapporte de façon générale à une turbomachine à cycle hybride, et plus particulièrement à un compresseur haute pression à cycle hybride équipant une telle turbine. En d'autres termes, l'invention concerne une turbomachine dont la partie concernant le compresseur haute pression est équipée d'une décharge permettant une communication entre le flux primaire de ce même compresseur, et le flux secondaire issu du compresseur basse pression.

### ETAT DE LA TECHNIQUE ANTERIEURE

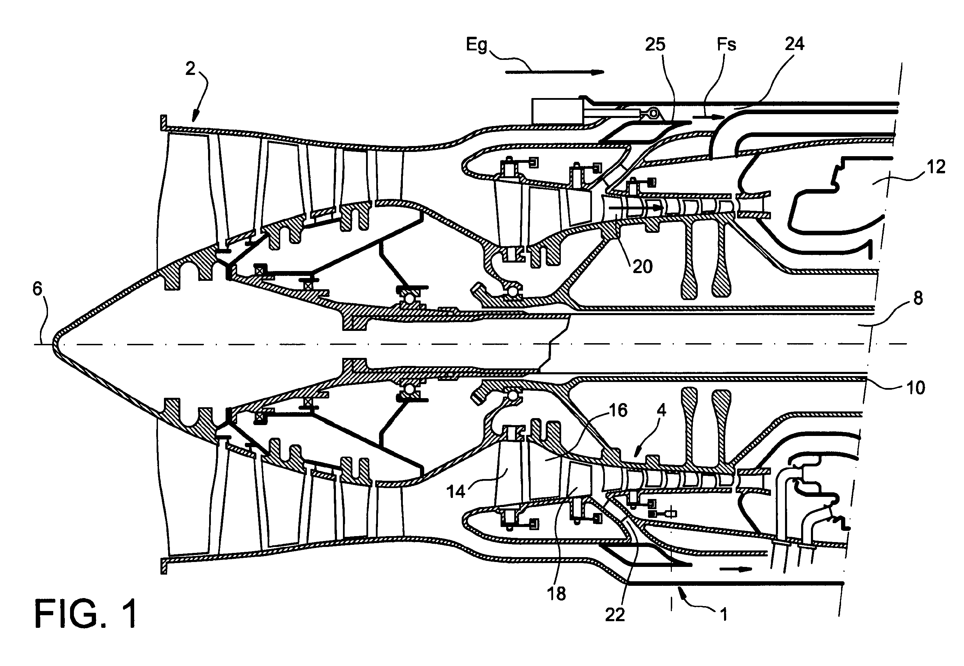

Une turbomachine à cycle hybride classique de l'art antérieur est partiellement représentée sur la figure 1, en coupe longitudinale.

Une telle turbomachine est par exemple décrit dans le brevet US 5 155 993.

Cette turbomachine 1 comprend d'amont en aval, dans une direction principale d'écoulement des gaz représentée schématiquement par la flèche Eg, un compresseur basse pression 2, ainsi qu'un compresseur haute pression à cycle hybride 4. Comme on peut le voir sur cette figure 1, les deux compresseurs 2 et 4 sont de forme sensiblement annulaire, et centrés sur un axe principal longitudinal 6 de la turbomachine 1. Bien entendu, cet axe 6 fait donc également office d'axe principal longitudinal pour ces deux compresseurs 2 et 4.

De façon connue, le compresseur basse pression 2 et le compresseur haute pression à cycle hybride, dénommé « compresseur HP à cycle hybride » dans la suite de la description, sont respectivement couplés à des turbines basse pression et haute pression (non représentées), par l'intermédiaire d'axes 8 et 10.

La particularité de cette turbomachine 1 réside dans le fait que le compresseur HP 4 est à cycle hybride, à savoir qu'il dispose d'une configuration lui permettant d'alimenter en air à la fois une chambre de combustion 12 pour assurer la propulsion de la turbomachine 1, mais également un flux secondaire contribuant à l'établissement global d'un cycle classique d'une turbomachine double flux, double corps, comme cela va être exposé de façon détaillée ci-dessous.

En effet, comme on peut l'apercevoir sur la figure 1, le compresseur HP à cycle hybride 4 comprend d'amont en aval, dans la direction principale d'écoulement des gaz Eg, un aubage directeur d'entrée 14 (de l'anglais IGV signifiant « Inlet Guide Vanes »), une première roue mobile 16, un premier redresseur à grille d'aubes 18, une seconde roue mobile 20, ainsi qu'une pluralité d'autres roues mobiles et de redresseurs (non référencés) disposés de façon alternée, jusqu'à une extrémité aval du compresseur HP 4 agencée à proximité de la chambre de combustion 12.

Entre le premier redresseur 18 et la seconde roue mobile 20, il est prévu dans une configuration à cycle hybride, un bec de séparation 22 s'étendant radialement vers l'extérieur ainsi que vers l'aval, à partir d'une paroi extérieure de ce compresseur HP 4. Le bec de séparation 22 prend de préférence la forme d'un conduit annulaire débouchant d'une part à l'intérieur du compresseur HP 4 en aval du premier redresseur 18 et en amont de la seconde roue 20, et d'autre part dans une veine annulaire 24 à travers laquelle circule un flux secondaire d'air représenté schématiquement par la flèche Fs.

De cette façon, comme mentionné précédemment, une partie de l'air constituant le flux secondaire Fs peut être prélevée à l'intérieur du compresseur HP 4, de manière à ce que ce flux secondaire Fs soit sensiblement renforcé. De plus, à l'aide d'une vanne 25 judicieusement positionnée, par exemple en sortie du bec de séparation 22, il est possible de faire varier le taux de dilution, à savoir le rapport entre la quantité d'air du flux secondaire provenant du compresseur HP 4, et la quantité totale d'air de ce même flux secondaire. A cet égard, il est indiqué que les turbomachines à cycle hybride sont généralement conçues de telle sorte que le taux de dilution puisse varier entre environ 0 et 20%, la plage effective de variation de ce taux de dilution étant en fait plus ou moins étendue en fonction du régime appliqué.

Cette spécificité des turbomachines à cycle hybride est globalement avantageuse en ce sens qu'elle autorise l'obtention d'un taux de dilution variable pour une position de tuyère moteur constante, ce qui permet alors d'augmenter certaines performances de ce moteur.

Néanmoins, son architecture particulière, et plus spécifiquement celle de son compresseur HP 4, engendre des inconvénients majeurs.

Effectivement, il est indiqué que pour faire face aux variations de régime de la turbomachine 1, le premier redresseur 18 prend la forme d'une grille d'aubes à calage variable, identique à celle rencontrée dans les compresseurs HP classiques de turbomachines n'étant pas à cycle hybride.

Ainsi, si la technologie de calage variable appliquée au compresseur HP permet de répondre correctement aux variations de régime de la turbomachine, elle n'est cependant pas satisfaisante lorsqu'il s'agit de prendre en compte les variations d'un paramètre aérodynamique supplémentaire, à savoir celui du prélèvement d'air effectué depuis le bec de séparation.

En effet, il a été remarqué que le fait de prévoir un taux de dilution variable, pour un régime quelconque donné, engendrait des conditions aérodynamiques également très variables pour les aubes des première et seconde roues mobiles du compresseur HP, de sorte que les performances globales de ce compresseur HP étaient fortement amoindries.

A titre indicatif, il est noté que les capacités en marge au pompage sont largement atténuées du fait de cette variabilité des conditions aérodynamiques, ces capacités étant pourtant nécessaires à tous les compresseurs et pour toutes les conditions de fonctionnement.

### EXPOSÉ DE L'INVENTION

L'invention a donc pour but de proposer un compresseur HP à cycle hybride, dont la conception remédie au moins partiellement aux inconvénients mentionnés ci-dessus relatifs aux réalisations de l'art antérieur.

Par ailleurs, le but de la présente invention est de présenter une turbomachine à cycle hybride comprenant un tel compresseur HP à cycle hybride.

Pour ce faire, l'invention a tout d'abord pour objet un compresseur HP à cycle hybride pour turbomachine, le compresseur comprenant une pluralité de roues mobiles et de redresseurs disposés alternativement, dont successivement d'amont en aval dans une direction principale d'écoulement de l'air à travers le compresseur, une première roue mobile, un premier redresseur et une seconde roue mobile, le compresseur comportant en outre un bec de séparation agencé entre le premier redresseur et la seconde roue mobile afin d'alimenter en air un flux secondaire de la turbomachine. Selon l'invention, le premier redresseur est un redresseur à double-grille comportant une grille d'aubes amont ainsi qu'une grille d'aubes aval, et en ce que ces grilles d'aubes amont et aval sont respectivement associées à des systèmes de calage variable amont et aval commandés de manière autonome.

Avantageusement, l'agencement particulier proposé permet d'optimiser, de façon indépendante et en fonction du régime de la turbomachine et du taux de dilution souhaité, d'une part l'adaptation en incidence de ce premier redresseur par action sur la grille d'aubes amont, et d'autre part le réglage de la prérotation de la seconde roue mobile par action sur la grille d'aubes aval. L'indépendance des systèmes de calage variable amont et aval permet par conséquent d'optimiser sensiblement le caractère aérodynamique du premier redresseur, ainsi que la prérotation de la seconde roue mobile agissant sur l'ensemble du bloc aval du compresseur HP.

De cette manière, à titre indicatif, lorsque le taux de dilution requis est faible, une action visant à ouvrir la grille d'aubes aval du premier redresseur permet de mettre la seconde roue mobile dans la capacité d'absorber une plus grande quantité de débit d'air, tandis qu'une action indépendante effectuée sur la grille d'aubes amont permet de conserver une coopération optimisée entre la première roue mobile et cette même grille d'aubes amont.

Bien entendu, cette fonctionnalité n'était pas envisageable dans les turbomachines à cycle hybride de l'art antérieur, en raison de l'antagonisme existant entre les besoins de fermeture de la grille d'aubes unique en entrée, et les besoins d'ouverture de cette même grille unique en sortie.

En d'autres termes, l'invention est particulièrement avantageuse en ce sens que l'apparition d'un paramètre aérodynamique supplémentaire dans les compresseurs HP à cycle hybride, à savoir celui du prélèvement variable d'air à l'aide du bec de séparation, est supportée par l'adjonction d'un degré de liberté d'adaptation additionnel, dans la mesure où la grille unique antérieurement proposée est remplacée par une double-grille à calages variables et indépendants.

Par conséquent, le fait de disposer d'une double-grille dont la grille amont a pour fonction principale d'optimiser sa coopération avec la première roue mobile, et dont la grille aval a pour fonction principale de faire face à la variabilité du taux de dilution, induit que la capacité d'adaptabilité du compresseur HP à cycle hybride est donc plus grande que celle rencontrée dans l'art antérieur.

Enfin, il est indiqué que la possibilité de prévoir deux lois de calage indépendantes et étant déterminées en fonction à la fois du régime et du taux de dilution, provoque une forte amélioration des performances aérodynamiques globales du compresseur HP, quels que soient les points de cycle et surtout pour ce qui concerne les capacités en marge au pompage, indépendamment du taux de dilution appliqué.

Chaque aube de chacune des grilles amont et aval du premier redresseur est apte à être pivotée autour d'un axe de rotation s'étendant sensiblement radialement. Ainsi, il est alors possible de prévoir que pour chaque aube de la grille amont, l'axe de rotation se situe à proximité d'un bord de fuite de cette aube, et que pour chaque aube de la grille aval, l'axe de rotation se situe à proximité d'un bord d'attaque de cette aube.

De façon avantageuse, le positionnement spécifique des axes de rotation permet d'optimiser l'effet aérodynamique de la fente présente entre l'aube amont et l'aube aval de chaque couple d'aubes du premier redresseur.

Plus précisément, la conception du compresseur peut être telle que pour chaque aube de la grille amont, l'axe de rotation se situe dans une portion aval de cette dernière débutant au niveau des deux tiers d'une corde de cette aube, et pour chaque aube de la grille aval, l'axe de rotation se situe dans une portion amont de cette dernière s'achevant au niveau du tiers d'une corde de cette aube.

Préférentiellement, en coupe transversale prise selon un plan quelconque situé en amont du premier redresseur, sur un cercle quelconque centré sur un axe principal longitudinal du compresseur et interceptant les grilles d'aubes amont et aval, une longueur L1 d'un arc de cercle délimité par l'axe de rotation d'une aube quelconque de la grille amont ainsi que par l'axe de rotation de l'aube de la grille aval la plus proche de l'aube quelconque de la grille amont, et une longueur L2 d'un arc de cercle délimité par les axes de rotation de deux aubes consécutives de la grille amont, sont telles que L1 est inférieure ou égale à un tiers de L2.

Avantageusement, cette spécificité permet d'optimiser encore davantage l'effet aérodynamique de la fente présente entre l'aube amont et l'aube aval de chaque couple d'aubes du premier redresseur, quels que soient les calages adoptés pour les grilles amont et aval.

Enfin, l'invention a également pour objet une turbomachine à cycle hybride, comprenant un compresseur HP à cycle hybride tel que celui décrit ci-dessus et également objet de la présente invention.

D'autres avantages et caractéristiques de l'invention apparaîtront dans la description détaillée non limitative ci-dessous.

### BRÈVE DESCRIPTION DES DESSINS

Cette description sera faite au regard des dessins annexés parmi lesquels ;
- la figure 1, déjà décrite, représente une turbomachine à cycle hydride de l'art antérieur ;
- la figure 2 représente une vue en demi-coupe longitudinale d'un compresseur HP à cycle hybride, selon un mode de réalisation préféré de la présente invention ;
- la figure 3 représente une vue partielle de dessus du compresseur HP à cycle hybride de la figure 2 ; et
- la figure 4 représente une vue partielle et schématique en coupe prise le long de la ligne IV-IV de la figure 2.

### EXPOSÉ DÉTAILLÉ D'UN MODE DE RÉALISATION PRÉFÉRÉ

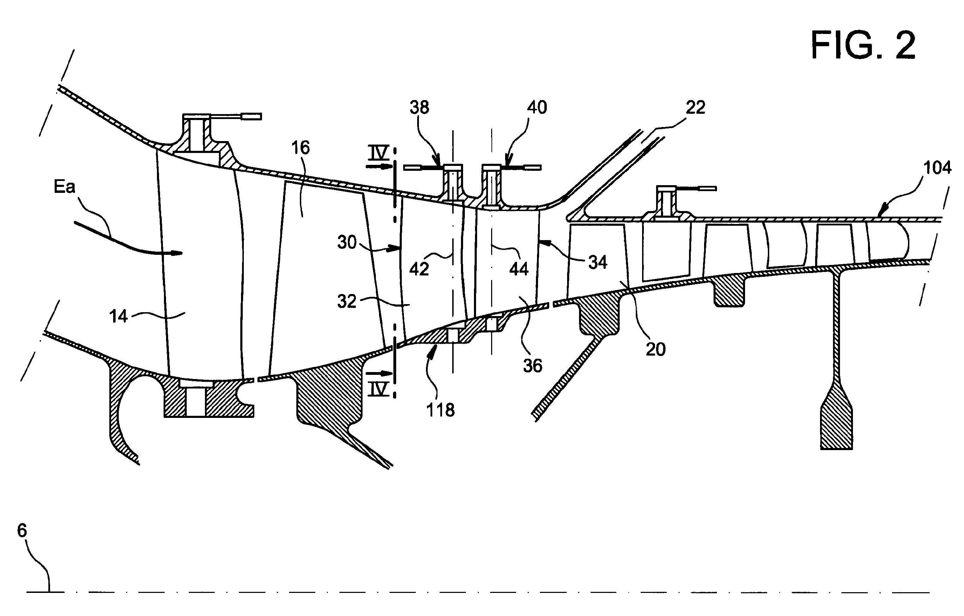

En référence à la figure 2, il est représenté un compresseur HP à cycle hybride 104, selon un mode de réalisation préféré de la présente invention.

Ce compresseur HP à cycle hybride 104 est destiné à équiper une turbomachine à cycle hybride, également objet de la présente invention.

A titre d'exemple illustratif, la turbomachine à cycle hybride selon l'invention peut être sensiblement identique à celle décrite précédemment et représentée sur la figure 1. Dans un tel cas, la seule différence entre la turbomachine selon l'invention et la turbomachine 1 réside alors dans le fait que le compresseur HP à cycle hybride 4 de la turbomachine 1 est remplacé par le compresseur HP à cycle hybride 104 qui va être exposé en détails ci-dessous.

Comme on peut le voir sur la figure 2, le compresseur HP à cycle hybride 104 est sensiblement identique au compresseur HP à cycle hybride 4 de la turbomachine 1, la principale différence se situant au niveau du premier redresseur. A ce titre, il est indiqué que sur les figures 1 à 4, les éléments portant les mêmes références numériques correspondent à des éléments identiques ou similaires.

Par conséquent, on peut s'apercevoir que le compresseur HP à cycle hybride 104 s'étend de façon annulaire autour d'un axe principal longitudinal 6, correspondant également à l'axe principal longitudinal de la turbomachine sur laquelle il est installé.

De plus, ce compresseur HP 104 comprend, d'amont en aval et dans une direction principale d'écoulement de l'air à travers ce même compresseur représentée par la flèche Ea, un aubage directeur d'entrée 14, une première roue mobile 16, un premier redresseur à grille d'aubes 118, une seconde roue mobile 20, ainsi qu'une pluralité d'autres roues mobiles et de redresseurs (non référencés) disposés alternativement, jusqu'à une extrémité aval du compresseur HP 104.

Toujours de la même façon que précédemment, entre le premier redresseur 118 et la seconde roue mobile 20, il est prévu un bec de séparation 22 s'étendant radialement vers l'extérieur ainsi que vers l'aval, à partir d'une paroi extérieure de ce compresseur HP 104. Le bec de séparation 22 prend, de préférence, la forme d'un conduit annulaire débouchant d'une part à l'intérieur du compresseur HP 104 en aval du premier redresseur 118 et en amont de la seconde roue 20, et d'autre part dans une veine annulaire (non représentée sur la figure 2) à travers laquelle circule un flux secondaire d'air.

Ainsi, une partie de l'air constituant le flux secondaire peut être prélevée à l'intérieur du compresseur HP 104, de manière à ce que ce flux secondaire soit sensiblement renforcé.

La particularité du compresseur HP 104 selon l'invention réside dans le fait que le premier redresseur 118 prend la forme d'un redresseur à double-grille. Effectivement, ce premier redresseur 118, situé entre les première et seconde roues mobiles 16 et 20, est constitué d'une grille amont 30 pourvue d'une pluralité d'aubes amont 32 réparties régulièrement de façon annulaire, ainsi que d'une grille aval 34 pourvue d'une pluralité d'aubes aval 36 réparties également régulièrement de façon annulaire. De préférence, chacune des grilles 30 et 34 comporte un nombre d'aubes 32 et 36 identique. Par conséquent, ces grilles 30 et 34 ont un même pas.

Toujours en référence à la figure 2, on peut voir que la grille d'aubes amont 30 est associée à un système de calage variable amont 38. De façon analogue, la grille d'aubes aval 34 est associée à un système de calage variable aval 40. De plus, il est indiqué que les deux lois de commande pilotant respectivement les systèmes de calage variable amont 38 et aval 40 sont totalement indépendantes l'une de l'autre, et qu'elles sont toutes les deux élaborées de manière à prendre en compte à la fois le régime de la turbomachine, ainsi que le taux de dilution appliqué.

Ainsi, cet agencement particulier permet d'augmenter les capacités aérodynamiques du compresseur HP 104 à la tenue à la variabilité du prélèvement d'air effectué par l'intermédiaire du bec de séparation 22.

A titre d'exemple, le compresseur HP à cycle hybride 104 pourrait être conçu de sorte que la différence d'angle entre les deux calages soit directement fonction du taux de dilution appliqué.

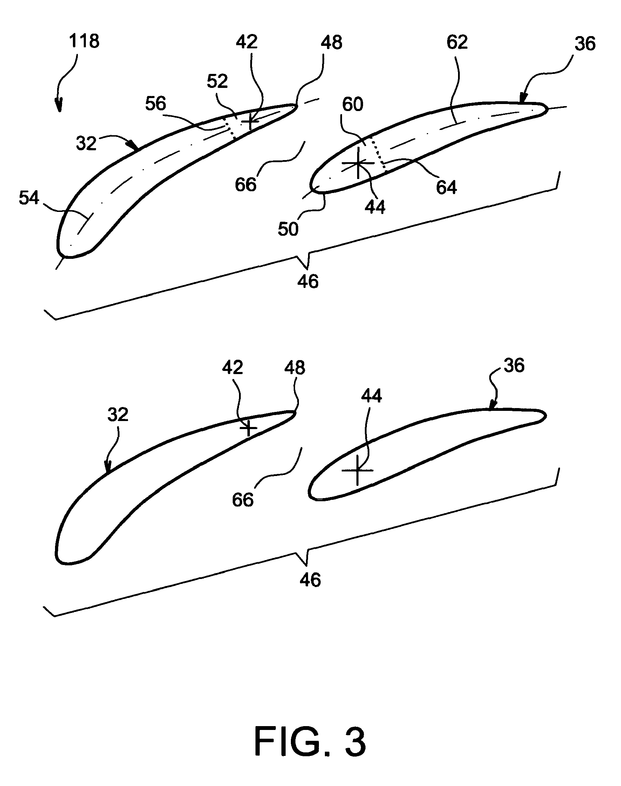

En référence à présent conjointement aux figures 2 et 3, on peut voir que chaque aube 32 de la grille amont 30 est apte à être pivotée autour d'un axe de rotation 42, chacun des axes de rotation 42 s'étendant sensiblement radialement. De la même manière, chaque aube 36 de la grille aval 34 est apte à être pivotée autour d'un axe de rotation 44, chacun des axes de rotation 44 s'étendant sensiblement radialement. Bien entendu, de façon connue de l'homme du métier, c'est cette possibilité de faire pivoter en même temps chacune des aubes 32 et 36 d'une même grille 30 et 34, qui permet d'avoir un « calage variable » de ces grilles 30 et 34.

Par ailleurs, comme cela est clairement visible sur la figure 3, les grilles d'aubes amont 30 et aval 34 sont agencées de sorte que chaque aube amont 32 soit sensiblement prolongée en aval par une aube aval 36, afin que ces deux aubes 32 et 36, situées à proximité l'une de l'autre, forment un couple d'aubes 46.

Cela permet alors d'assimiler grossièrement chaque couple d'aubes 46 à une « aube unique à courbure variable », dans la mesure où chacune des deux aubes 32 et 36, constituant un couple d'aubes 46, peut être calée de façon indépendante.

Pour accentuer encore davantage cette notion d'« aube unique à courbure variable », il est avantageux de prévoir que pour chaque aube amont 32 de la grille amont 30, l'axe de rotation 42 se situe à proximité d'un bord de fuite 48 de cette aube 32. De la même façon, pour chaque aube aval 36 de la grille aval 34, l'axe de rotation 44 se situe à proximité d'un bord d'attaque 50 de cette aube 36.

De manière plus spécifique et toujours en référence à la figure 3, on peut prévoir que pour chaque aube amont 32 de la grille amont 30, l'axe de rotation 42 se situe dans une portion aval 52 de cette dernière, la portion aval 52 débutant préférentiellement au niveau des deux tiers d'une corde 54 de l'aube 32, bien entendu du côté du bord de fuite 48. Il est noté que cette démarcation est représentée schématiquement par la ligne en pointillés 56. Toujours de façon analogue, pour chaque aube aval 36 de la grille aval 34, l'axe de rotation 44 se situe dans une portion amont 60 de cette dernière, la portion amont 60 s'achevant préférentiellement au niveau d'un tiers d'une corde 62 de l'aube 36, du côté du bord d'attaque 50. Ici encore, cette démarcation est représentée schématiquement par la ligne en pointillés 64.

Par conséquent, on peut s'apercevoir que le positionnement spécifique de ces axes de rotation 42 et 44 permet d'optimiser l'effet aérodynamique d'une fente 66 située entre l'aube amont 32 et l'aube aval 36 de chaque couple d'aubes 46 du premier redresseur 118, et ce quels que soient les calages des grilles amont 30 et aval 34 commandés respectivement par les systèmes de calage variable 38 et 40.

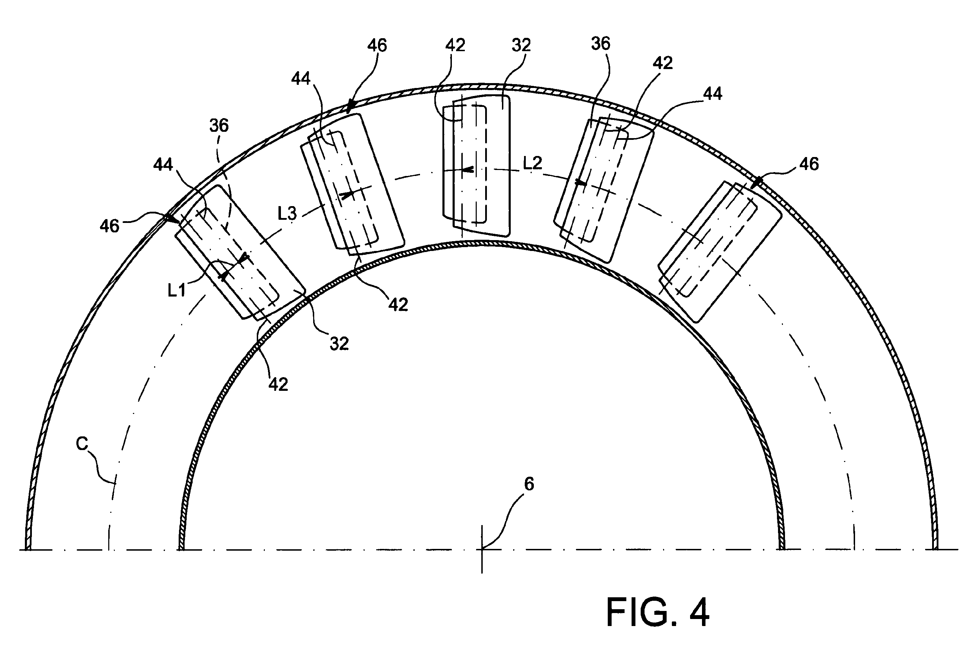

En outre, la proximité des aubes amont 32 et aval 36 de chaque couple d'aubes 46, permettant d'optimiser sensiblement le caractère aérodynamique du premier redresseur 118, peut notamment être visualisée sur la figure 4 représentant schématiquement et partiellement une coupe transversale prise selon un plan en amont de la grille d'aubes amont 30. A titre indicatif, le plan concerné est indiqué schématiquement par la ligne IV-IV de la figure 2.

En effet, sur cette figure 4, il est représenté un cercle C quelconque centré sur l'axe principal longitudinal 6 du compresseur HP 104, ce cercle interceptant chacune des grilles d'aubes amont 30 et aval 34.

Sur ce cercle C, il est tout d'abord indiqué une longueur L1 d'un arc de cercle délimité d'une part par l'axe de rotation 42 d'une aube quelconque 32 de la grille amont 30, et d'autre part par l'axe de rotation 44 de l'aube 36 la plus proche de l'aube amont quelconque 32. En d'autres termes, pour chaque couple d'aubes 46 du premier redresseur 118, la longueur L1 est celle de l'arc de cercle délimité par les axes de rotation 42 et 44 des aubes 32 et 36 constituant le couple 46.

D'autre part, sur ce même cercle C dont la grandeur représentée sur la figure 4 est donnée à titre indicatif et non limitatif, il est également indiqué une longueur L2 d'un arc de cercle délimité par les axes de rotation 42 de deux aubes consécutives 32 de la grille amont 30.

En outre, sur ce cercle C, il est indiqué une longueur L3 d'un arc de cercle délimité par les axes de rotation 44 de deux aubes consécutives 36 de la grille aval 34. A cet égard, il est précisé que les longueurs L2 et L3 sont préférentiellement identiques.

Bien entendu, les aubes 32 et 36 étant réparties régulièrement autour de l'axe principal longitudinal 6, les longueurs L1, L2 et L3 sont identiques quelles que soient les aubes ou les couples considérés.

De façon préférée, on peut prévoir que le premier redresseur 118 soit conçu de sorte que L1 soit inférieure ou égale à un tiers de L2 ou L3, ce qui permettrait d'obtenir un compresseur HP à cycle hybride 104 dont les performances aérodynamiques globales sont très satisfaisantes, quels que soient les points de cycle et surtout pour ce qui concerne les capacités en marge au pompage, indépendamment du taux de dilution appliqué.

Bien entendu, diverses modifications peuvent être apportées par l'homme du métier au compresseur HP à cycle hybride 104 qui vient d'être décrit, uniquement à titre d'exemple non limitatif, comme l'indiques les revendications dépendantes.

## Revendications

1. Compresseur HP à cycle hybride (104) pour turbomachine, ledit compresseur comprenant une pluralité de roues mobiles et de redresseurs disposés alternativement, dont successivement d'amont en aval dans une direction principale d'écoulement de l'air (Ea) à travers le compresseur, une première roue mobile (16), un premier redresseur (118) et une seconde roue mobile (20), ledit compresseur comportant en outre un bec de séparation (22) agencé entre le premier redresseur (118) et la seconde roue mobile (20) afin d'alimenter en air un flux secondaire de la turbomachine, le premier redresseur (118) étant un redresseur à double-grille comportant une grille d'aubes amont (30) ainsi qu'une grille d'aubes aval (34), ces grilles d'aubes amont et aval (30,34) étant respectivement associées à des systèmes de calage variable amont et aval (38,40) commandés de manière autonome, chaque aube (32,36) de chacune des grilles amont et aval (30,34) du premier redresseur (118) étant apte à être pivotée autour d'un axe de rotation (42,44) s'étendant sensiblement radialement, **caractérisé en ce que** pour chaque aube (32) de la grille amont (30), l'axe de rotation (42) se situe à proximité d'un bord de fuite (48) de ladite aube (32), et **en ce que** pour chaque aube (36) de la grille aval (34), l'axe de rotation (44) se situe à proximité d'un bord d'attaque (50) de ladite aube (34).

2. Compresseur HP à cycle hybride (104) selon la revendication 1, **caractérisé en ce que** pour chaque aube (32) de la grille amont (30), l'axe de rotation (42) se situe dans une portion aval (52) de cette dernière débutant au niveau des deux tiers d'une corde (54) de ladite aube (32), et en ce pour chaque aube (36) de la grille aval (34), l'axe de rotation (44) se situe dans une portion amont (60) de cette dernière s'achevant au niveau du tiers d'une corde (62) de ladite aube (34).

3. Compresseur HP à cycle hybride (104) selon l'une quelconque des revendications 1 et 2, **caractérisé en ce qu'**en coupe transversale prise selon un plan quelconque situé en amont du premier redresseur (118), sur un cercle quelconque (C) centré sur un axe principal longitudinal (6) du compresseur et interceptant les grilles d'aubes amont et aval (30,34), une longueur L1 d'un arc de cercle délimité par l'axe de rotation (42) d'une aube quelconque (32) de la grille amont (30) ainsi que par l'axe de rotation (44) de l'aube (36) de la grille aval (34) la plus proche de l'aube quelconque (32) de la grille amont (30), et une longueur L2 d'un arc de cercle délimité par les axes de rotation (42) de deux aubes consécutives (32) de la grille amont (30), sont telles que L1 est inférieure ou égale à un tiers de L2.

4. Compresseur HP à cycle hybride (104) selon la revendication 3, **caractérisé en ce qu'**une longueur L3 d'un arc de cercle délimité par les axes de rotation (44) de deux aubes consécutives (36) de la grille aval (34) est égale à la longueur L2.

5. Turbomachine à cycle hybride (1) **caractérisée en ce qu'**elle comprend un compresseur HP à cycle hybride (104) selon l'une quelconque des revendications précédentes.

## Claims

1. Hybrid cycle HP compressor (104) for a turbine engine, said compressor comprising a plurality of rotor wheels and rectifiers arranged alternately, from upstream to downstream successively in a principal direction of air flow (Ea) through the compressor, a first rotor wheel (16) a first rectifier (118) and a second rotor wheel (20), said compressor furthermore comprising a separation slot (22) set between the first rectifier (118) and the second rotor wheel (20) in order to supply the turbine engine with a secondary air flux, said first rectifier (118) being a double grid rectifier comprising a grid of vanes upstream (30) as well as a grid of vanes downstream (34), these grids of vanes upstream and downstream (30,34) being associated respectively with variable setting systems upstream and downstream (38,40) controlled in autonomous manner, each of the upstream and downstream grids (30,34) of the first rectifier (118) being capable of being pivoted around an axis of rotation (42,44) extending closely radially, **characterised in that** for each vane (32) of the upstream grid (30), the axis of rotation (42) is located close to a trailing edge (48) of said vane (32), and **in that** for each vane (36) of the downstream grid (34), the axis of rotation (44) is located close to a leading edge (50) of said vane (34).

2. Hybrid cycle HP compressor (104) according to claim 1, **characterised in that** for each vane (32) of the upstream grid (30), the axis of rotation (42) is located in a downstream portion (52) of the latter beginning at the level of two thirds of a chord (54) of said vane (32), and **in that** for each vane (36) of the downstream grid (34), the axis of rotation (44) is located in an upstream portion (60) of the latter, ending at the level of a third of a chord (62) of said vane (34).

3. Hybrid cycle HP compressor (104) according to any one of claims 1 and 2, **characterised in that** in transversal cross-section taken along any plane located upstream of the first rectifier (118), on any circle C centred on a principal longitudinal axis (6) of the compressor and intercepting the upstream and downstream grids of vanes (30,34), a length L1 of an arc of a circle defined by the axis of rotation (42) of any vane of the upstream grid (30) as well as by the axis of rotation (44) of the vane (36) of the downstream grid (34) the closest to any vane (32) of the upstream grid (30), and a length L2 of an arc of a circle defined by the axes of rotation (42) of two consecutive vanes (32) of the upstream grid (30), are such that L1 is less than or equal to a third of L2.

4. Hybrid cycle HP compressor (104) according to claim 3, **characterised in that** a length L3 of an arc of a circle defined by the rotation axes (44) of two consecutive vanes (36) of the downstream grid (34) is equal to the length L2.

5. Hybrid cycle turbine engine (1) **characterised in that** it comprises a hybrid cycle HP compressor (104) according to any one of the preceding claims.

## Patentansprüche

1. Hochdruckverdichter für Hybridkreislauf (104) für Turbomaschinen, wobei dieser Verdichter eine Mehrzahl von Rotoren und Leitschaufelrädern, die abwechselnd angeordnet sind, aufweist, darunter in einer Hauptströmungsrichtung der Luft (Ea) durch den Verdichter von vorn nach hinten aufeinander folgend einen ersten Rotor (16), ein erstes Leitschaufelrad (118) und einen zweiten Rotor (20), wobei dieser Verdichter ferner einen Trennauslauf (22) aufweist, der zwischen dem ersten Leitschaufelrad (118) und dem zweiten Rotor (20) angeordnet ist, um Luft in einen Mantelstrom der Turbomaschine einzuspeisen, wobei das erste Leitschaufelrad (118) ein Doppelgitter-Leitschaufelrad ist, das ein vorderes Schaufelgitter (30) sowie ein hinteres Schaufelgitter (34) aufweist, wobei dieses vordere und dieses hintere Schaufelgitter (30, 34) einem vorderen bzw. hinteren Verstellsystem (38 bzw. 40) zugeordnet sind, welche unabhängig voneinander gesteuert werden, wobei jede Schaufel (32, 36) jedes der Gitter, des vorderen und des hinteren (30, 34) des ersten Leitschaufelrads (118) geeignet ist, um eine sich im Wesentlichen radial erstreckende Rotationsachse (42, 44) geschwenkt zu werden,
**dadurch gekennzeichnet,**
**dass** sich bei jeder Schaufel (32) des vorderen Gitters (30) die Rotationsachse (42) in der Nähe einer Hinterkante (48) dieser Schaufel (32) befindet, und dass sich bei jeder Schaufel (36) des hinteren Gitters (34) die Rotationsachse (44) in der Nähe einer Vorderkante (50) dieser Schaufel (34) befindet.

2. Hochdruckverdichter für Hybridkreislauf (104) nach Anspruch 1,
dadurch gekenntzeichnet,
dass sich bei jeder Schaufel (32) des vorderen Gitters (30) die Rotationsachse (42) in einem hinteren Abschnitt (52) des letzteren befindet, welcher in Höhe von zwei Dritteln einer Profilsehne (54) dieser Schaufel (32) beginnt, und dass sich bei jeder Schaufel (36) des hinteren Gitters (34) die Rotationsachse (44) in einem vorderen Abschnitt (60) des letzteren befindet, welcher in Höhe von einem Drittel einer Profilsehne (62) dieser Schaufel (34) endet.

3. Hochdruckverdichter für Hybridkreislauf (104) nach einem der Ansprüche 1 und 2,
**dadurch gekennzeichnet,**
**dass** im Querschnitt in einer beliebigen Ebene, die sich vor dem ersten Leitschaufelrad (118) befindet, auf einem beliebigen Kreis (C), der auf einer Hauptlängsachse (6) des Verdichters zentriert ist und das vordere und das hintere Schaufelgitter (30, 34) erfasst, eine Länge L1 eines Kreisbogens, der von der Rotationsachse (42) einer beliebigen Schaufel (32) des vorderen Gitters (30) sowie von der Rotationsachse (44) der Schaufel (36) des der beliebigen Schaufel (32) des vorderen Gitters (30) am nächsten gelegenen hinteren Gitters (34) begrenzt wird, und eine Länge L2 eines Kreisbogens, der von den Rotationsachsen (42) zweier aufeinander folgender Schaufeln (32) des vorderen Gitters (30) begrenzt wird, dergestalt beschaffen sind, dass L1 kleiner als oder gleich einem Drittel von L2 ist.

4. Hochdruckverdichter für Hybridkreislauf (104) nach Anspruch 3,
**dadurch gekennzeichnet,**
**dass** eine Länge L3 eines Kreisbogens, der von den Rotationsachsen (44) zweier aufeinander folgender Schaufeln (36) des hinteren Gitters (34) begrenzt wird, gleich der Länge L2 ist.

5. Turbomaschine mit Hybridkreislauf (1),
**dadurch gekennzeichnet,**
**dass** der sie einen Hochdruckverdichter für Hybridkreislauf (104) nach einem der vorherigen Ansprüche aufweist.
